(19) Europäisches Patentamt
European Patent Office
Office européen des brevets

(11) **EP 2 161 860 A1**

## (12) EUROPEAN PATENT APPLICATION

(43) Date of publication:
**10.03.2010 Bulletin 2010/10**

(21) Application number: **08105254.0**

(22) Date of filing: **05.09.2008**

(51) Int Cl.:
***H04B 10/17*** (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks OY**
**02610 Espoo (FI)**

(72) Inventors:
- **Luis, Ruben Soares**
  **9500-187 Ponta Delgada**
  **Azores (PT)**

- **Monteiro, Paulo Miguel**
  **3930-209 Ilhavo (PT)**
- **Teixeira, António**
  **3830-000 Ilhavo (PT)**

(74) Representative: **Bruglachner, Thomas E.**
**Nokia Siemens Networks Oy**
**COO RTP IPR / Patent Administration**
**80240 Munich (DE)**

(54) **All-optical regenerator**

(57)     A received signal (PMS) is combined with a first and a second pump signal (PS1,PS2) and fed into a highly nonlinear fiber (2). Nonlinear effects like SPM, XPM and FWM are used to reduce the signal distortion in the highly nonlinear fiber (2). The signal quality is substantially improved. The pump frequencies are allocated on both sides of the carrier frequency of the received signal. Suitable for all optical regeneration of phase modulated signals, such as PSK and DPSK signals.

# FIG 1

EP 2 161 860 A1

## Description

FIELD OF THE INVENTION

The invention refers to an all-optical regenerator for phase or differential phase modulated signals.

BACKGROUND OF THE INVENTION

OBJECTS AND SUMMERY OF THE INVENTION

It is an object of the invention to disclose an all optical regenerator arrangement which has an uncomplex structure.

The principle of the invention is direct manipulation of the degraded input signal in order to achieve regeneration. This manipulation is carried out by using phase sensitive amplification by four wave mixing (FWM) and also the effects of self phase modulation (SPM) and cross phase modulation (XPM) altogether.

In a first embodiment two pump signals are combined with a received signal and fed into a highly nonlinear fiber. According to the length of the fiber and the powers of the pump signal sources and the received signal, the distortions are reduced.

A preferred embodiment generates two coherent pump signals reducing the signal degradation caused by laser phase noise and instability.

Improved details are described in the depending claims.

The main advantages of this regenerator are:

- absence of interferometric structures, leading to robustness,

- maintenance of differential information of the signal, thus requiring no changes of other components of the transmission system.

BRIEF DESCRIPTION OF THE DRAWINGS

Examples of the invention including a presently preferred embodiment are described below with reference to accompanying drawings, where

    FIG 1 shows a schematic diagram of a first embodiment,
    FIG 2 shows a schematic diagram explaining the function of the all optical regenerator,
    FIG 3 shows the influence of FWM and SPM on the constellation of a received signal,
    FIG 4 shows the eye opening at the input and after 280 m of a nonlinear fiber, and
    FIG 5 shows a schematic diagram of a preferred embodiment.

DETAILED DESCRIPTION OF THE INVENTION

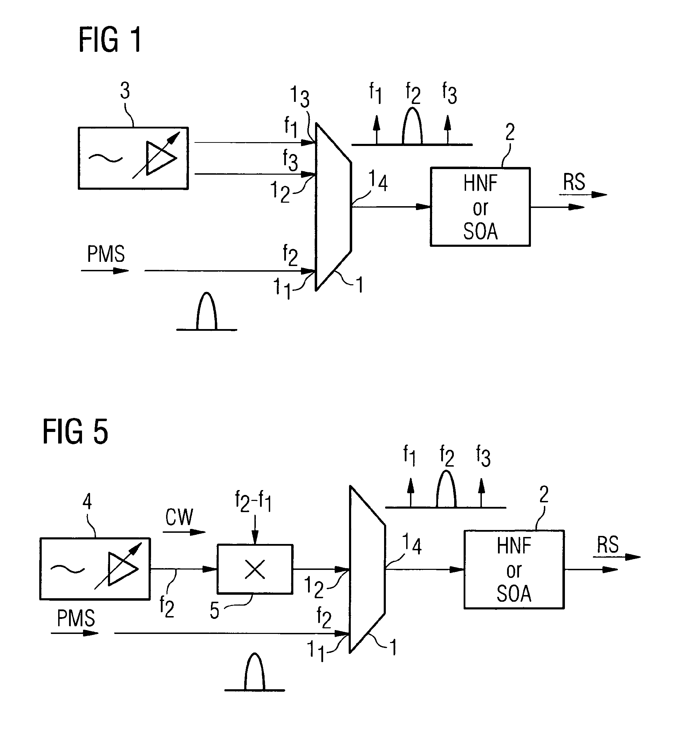

The all-optical regenerator as illustrated in **FIG 1** comprises a wavelength division multiplexer (WDM) 1 and a nonlinear element 2, e.g. a highly nonlinear fiber (HNF) or a semiconductor optical amplifier (SOA), connected to an output $1_4$ of the WDM 1. A phase modulated signal PMS is fed to a first input $1_1$ of WDM 1.
A pump signal generator 3 emits a first pump signal PS1 and a second pump signal PS2, which are fed to a second input $1_2$ and to a third input $1_3$ respectively of the WDM 1. The power and/or frequencies of the pump signals PS1, PS2 may be adjustable but stable.

To explain the invention it is assumed that the phase modulated signal PMS is a DPSK (differential phase shift keying) signal or binary modulated PSK (phase shift keying) signal. The principle of the invention is the direct manipulation of the constellation of the degraded input signal, in order to achieve regeneration. This manipulation is carried out using not only phase sensitive amplification (through four wave mixing FWM), but also with SPM (self phase modulation) and XPM (cross phase modulation) altogether.

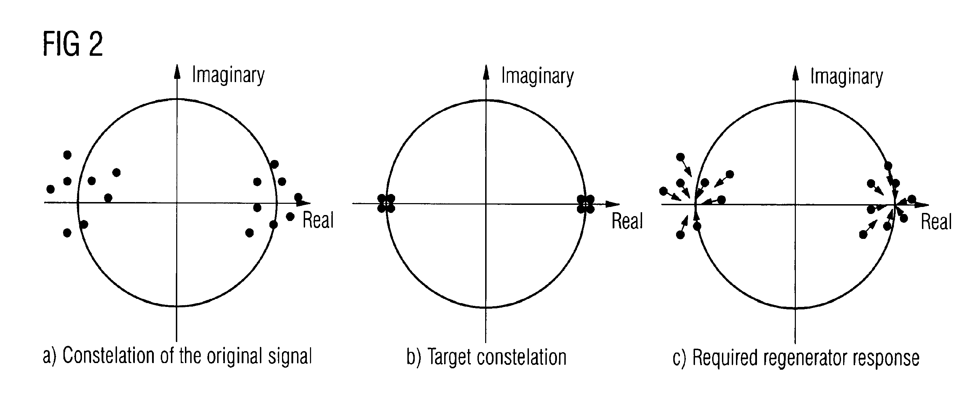

To understand this principle, consider an example of a degraded DPSK signal, presented in **FIG 2.** Each point in the constellation **FIG 2a** represents a sample of the signal PMS in the ideal sampling instant.

An ideal regenerator would affect the signal in a way that all the points are somehow concentrated (or focused) on two opposing points of the constellation, as presented in **FIG 2b**. To achieve this purpose, the complex response of the regenerator should ideally impose an intensity and phase-dependent vector response, as represented in **FIG 2c**.

The most simple and robust way to achieve this manipulation is to use a single HNF stage (or SOA). The control of the fiber nonlinearities is achieved with the use of more than one pump signal, as illustrated in FIG 1. In this arrangement the two continuous waveform (CW) pump signals PS1, PS2 are combined with the input signal PMS at the input of the nonlinear device 2. The frequencies $f_1$ and $f_3$ of the pump signals PS1, PS2 are located symmetrically around the carrier frequency $f_2$ of the input signal PMS.

The impact of SPM, XPM and FWM on the constellation of the input signal is considered separately. These results may be regarded by the complex derivate of the optical field from the nonlinear Schrödinger equation and isolating the impact of each effect separately as:

$$du_2 = -j\gamma \cdot \left|u_2\right|^2 \cdot u_2 \cdot dz \qquad (1)$$

for SPM,

$$du_2 = -4j\gamma \cdot u_2 \cdot P_{pump} \cdot dz \qquad (2)$$

for XPM, and

$$du_2 = -2j\gamma \cdot u_2^* \cdot P_{pump} \cdot dz \qquad (3)$$

for FWM,
where $u_2$ is the complex envelope of the optical field of the input signal, $P_{pump}$ is the power of each pump signal (assumed identical for both pumps), and $\gamma$ is the nonlinearity coefficient of the HNF, z is the transmission direction. "d" stays for differential.

The impacts of the nonlinear effects should here be only commented briefly:

The impact of SPM is a spiral rotation of the constellation, representing the power-dependent rotation characteristic of SPM. In the case of XPM this rotation is no longer dependent on the power of the input signal, but only on the power of the pump signals. Finally, the impact of FWM induced by the double-pump configuration, results in this case in a phase-dependent gain orientation of 45°.

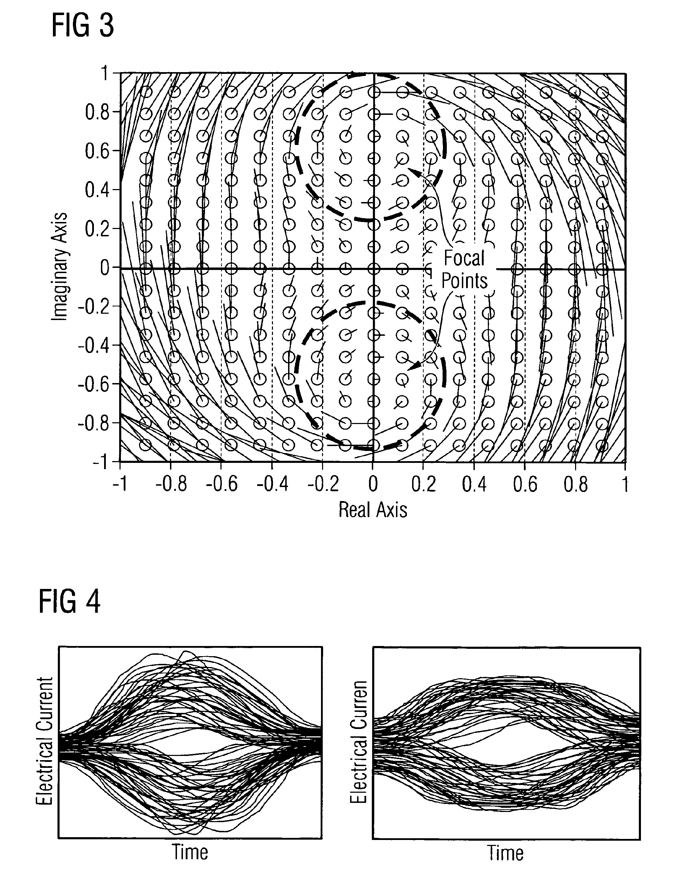

The effects described separately do not implement a regenerative system on their own. To design a regenerative system several effects have to be considered simultaneously. The simultaneous impact of SPM and FWM on the signal constellation has to be considered as shown in FIG 3.

Fig. 3 shows the derivative of u2 (du2) represented as lines for an arbitrary set of u2 points in the signal constellation, represented as circles. This figure clearly illustrates the definition of focal points. In the region located around the focal points the signal will become "trapped", converging to the focal points. Naturally, if a given point strays far from the focal point, it will never converge, eventually leading to an error. This property allows defining regions of convergence, represented in as dashed circles. These regions show that one may expect a reasonable regeneration for a given minimum optical signal-to-noise ratio (OSNR). For OSNR values below this limit, the regenerative capability of the system is impaired. The position of the focal points is related to the relative powers of the signal and pumps. Considering the impact of XPM additionally would lead to a rotation of the axis of the focal points. This will not be represented because it becomes too complex to visualize from the polar diagrams. Note that the focal points in Fig. 3 are presented over the imaginary axis and not the real axis, as initially illustrated in Fig. 2c. However, this rotation merely depends on the reference of the observer and is irrelevant to the overall objective of the system.

To illustrate the impact of the regenerator on the constellation of the input signal, consider as an example the regenerator presented in FIG 1. The pump signals and the input DPSK signal have average powers of 170 mW and 26 mW, respectively. The considered nonlinear optical device is a HNF with null dispersion, a nonlinearity coefficient of 15 W$^{-1}$·km$^{-1}$ and a length up to 490 m. In this example, the input signal is degraded by deterministic noise, imposing circular fluctuations around the average symbols of the constellation. The variance of the symbols tends to reduce up to a fiber length of 280 m, where it is minimal. For fiber lengths above 280 m, the symbols tend to spread out, leading to an output signal which is further degraded than the input signal.

A similar analysis may be conducted assuming complex Gaussian noise, similar to ASE.

FIG 4 presents eye diagrams of the original signal and regenerated signal RS after 280 m of fiber after balanced photo-detection. It is shown that the noise present in the original signal is effectively compressed, thus reducing the signal-to-noise ratio of the detected signal.

The variance of the phase noise is substantially reduced (above 3 dB improvement) for input standard deviations below 0.35 rad. The maximum improvement of 6 dB was verified for a standard deviation of ~0.33 rad. phase deviation of the output signal in comparison with the input signal.

Phase noise of the pump sources and insufficient laser stability is a limiting performance factor. A solution to these problems lies in an alternative implementation, presented in FIG 5. In this embodiment, a single constant wave pump source 4 is used. The light from the pump signal source is sinusoidal modulated in a frequency modulator 5 to generate a frequency comb, where two components at $f_1$ and $f_3$ are selected and combined in the WDM 1 with the signal PMS to be regenerated.

This setup has the advantage that the two pumps are now coherent, presenting the same phase noise, and allows precise control of the frequency difference between the two pumps. Considering more than two pumps will also increase the degrees of freedom to select further focal points and position them in the constellation in order to adapt this scheme to other signal formats, such as QPSK (quadrature phase shift keying) or DQPSK (differential quadrature phase shift keying).

REFERENCE SIGNS

| | |
|---|---|
| 1 | wavelength division multiplexer |
| 2 | nonlinear element |
| 3 | pump signal generator |
| 4 | constant wave signal generator |
| 5 | frequency modulator |
| $1_1$ | first input of the WDM |

1$_2$     second of the WDM
1$_3$     third of the WDM
1$_4$     output of the WDM


**Claims**

1.  All optical regenerator for a phase modulated signal (PMS) comprising a wavelength division multiplexer (1) receiving the phase modulated signal (PMS), at least a first pump-signal (PS1) and a second pump-signal (PS2) which pump frequencies ($f_1$, $f_3$) are allocated on both sides of a carrier frequency ($f_2$) of the phase modulated signal (PS), and a nonlinear optical element (2) connected to an output ($1_4$) of the wavelength division multiplexer (1) regenerating the phase modulated signal (PS) according to its nonlinearity and the power of the pump signals (PS1, PS2).

2.  All optical regenerator according to claim 1, wherein the first pump-signal (PS1) and the second-pump signal (PS2) are fed to a second input ($1_2$) and a third input ($1_3$) of the wavelength division multiplexer (1).

3.  All optical regenerator according to claim 2, Comprising a pump-signal generator (3) outputting the first pump-signal (PS1) and the second pump-signal (PS2) with adjustable amplitudes.

4.  All optical regenerator according to claim 1, Wherein a wavelength division multiplex signal comprising the the first pumps-signal (PS1) and the second pump-signal (PS2) is fed to a second input ($1_2$) of the wavelength division multiplexer (1).

5.  All optical regenerator according to claim 4, comprising a constant wave generator (4) emitting a constant wave signal (CW) and a modulator (5) connected in series and modulating the constant wave signal (CW) generating the first pump-signal (PS1) and the second pump-signal (PS2).

6.  All optical regenerator according to claim 4, Comprising the constant wave generator (4) emitting a constant wave signal (CW) with an adjustable amplitude.

7.  All optical regenerator according to one of the claims claim 1, 3 or 5, comprising as an nonlinear optical element (2) a highly nonlinear fiber (HNF) or a semiconductor optical amplifier (SOA).

8.  All optical regenerator according to one of the claims claim 1, 2 or 4, wherein the frequencies ($f_1$, $f_3$) of the at least first pump signal (PS1) and second pump signal (PS2) are symmetrically allocated around the carrier frequency ($f_2$) of the phase modulated signal (PS).

9.  All optical regenerator according to claim 8, wherein the at least first pump-signal (PS1) second pump-signal (PS2) have the same power.

## FIG 1

## FIG 5

FIG 2

a) Constelation of the original signal

b) Target constelation

c) Required regenerator response

## FIG 3

## FIG 4

Europäisches
Patentamt

European
Patent Office

Office européen
des brevets

## EUROPEAN SEARCH REPORT

Application Number

EP 08 10 5254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEVIN CROUSSORE ET AL: "Phase Regeneration of NRZ-DPSK Signals Based on Symmetric-Pump Phase-Sensitive Amplification" IEEE PHOTONICS TECHNOLOGY LETTERS, IEEE SERVICE CENTER, PISCATAWAY, NJ, US, vol. 19, no. 11, 1 June 2007 (2007-06-01), pages 864-866, XP011181181 ISSN: 1041-1135 * the whole document * ----- | 1-9 | INV. H04B10/17 |
| X | KEVIN CROUSSORE ET AL: "Phase and Amplitude Regeneration of Differential Phase-Shift Keyed Signals Using Phase-Sensitive Amplification" IEEE JOURNAL OF SELECTED TOPICS IN QUANTUM ELECTRONICS, IEEE SERVICE CENTER, PISCATAWAY, NJ, US, vol. 14, no. 3, 1 May 2008 (2008-05-01), pages 648-658, XP011215927 ISSN: 1077-260X Items IV and V ----- | 1-9 | |
| X | A. BOGRIS AND D.SYVRIDIS: "RZ-DPSK Signal Regeneration Based on Dual-Pump Phase-Sensitive Amplification in Fibers" IEEE PHOTONICS TECHNOLOGY LETTERS, vol. 18, no. 20, 15 October 2006 (2006-10-15), pages 2144-2146, XP002514705 * the whole document * ----- -/-- | 1-9 | TECHNICAL FIELDS SEARCHED (IPC)<br><br>H04B |

The present search report has been drawn up for all claims

| Place of search | Date of completion of the search | Examiner |
|---|---|---|
| Munich | 11 February 2009 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 08 10 5254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/285197 A1 (MCKINSTRIE COLIN J [US]) 21 December 2006 (2006-12-21)<br>* abstract *<br>* paragraphs [0005], [0006] *<br>* paragraph [0020] *<br>* paragraph [0039] *<br>* figures 3-5,8 * | 1-9 | |
| X | C. J. MCKINSTRIE AND S. RADIC: "Phase-sensitive amplification in a fiber" OPTICS EXPRESS, vol. 12, no. 20, 4 October 2004 (2004-10-04), pages 4973-4979, XP002514706 * the whole document * | 1-9 | |
| X | RADIC S ET AL: "All-Optical Regeneration in One- and Two-Pump Parametric Amplifiers Using Highly Nonlinear Optical Fiber" IEEE PHOTONICS TECHNOLOGY LETTERS, IEEE SERVICE CENTER, PISCATAWAY, NJ, US, vol. 15, no. 7, 1 July 2003 (2003-07-01), XP011067766 ISSN: 1041-1135 Items III and IV | 1-9 | TECHNICAL FIELDS SEARCHED (IPC) |

The present search report has been drawn up for all claims

| Place of search | Date of completion of the search | Examiner |
|---|---|---|
| Munich | 11 February 2009 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 10 5254

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2009

| Patent document cited in search report | Publication date | Patent family member(s) | Publication date |
|---|---|---|---|
| US 2006285197 A1 | 21-12-2006 | NONE | |

EPO FORM P0459

For more details about this annex : see Official Journal of the European Patent Office, No. 12/82